# EUROPEAN PATENT SPECIFICATION

(11) **EP 2 193 280 B1**
(45) Date of publication and mention of the grant of the patent: **11.07.2012**
(21) Application number: 08803559.7
(22) Date of filing: 03.09.2008
(51) Int. Cl.: F16C 25/08, F16F 9/26, F16F 15/023, F16F 15/12, F16F 15/16

(54) **AN APPARATUS FOR DAMPING THE TORSIONAL EXCITATION OF A HOLLOW DRIVE SHAFT**
VORRICHTUNG ZUR DÄMPFUNG DER TORSIONSANREGUNG EINER HOHLANTRIEBSWELLE
APPAREIL D'AMORTISSEMENT DE L'EXCITATION EN TORSION D'UN ARBRE D'ENTRAÎNEMENT CREUX

(30) Priority: 27.09.2007 GB 0718861
(43) Date of publication of application: 09.06.2010
(73) Proprietor: Siemens Aktiengesellschaft, 80333 München (DE)
(72) Inventor: KNOWLES, Grahame, Lincoln LN6 3LN (GB)
(86) International application number: PCT/EP2008/061588
(87) International publication number: WO 2009/040221

(56) References cited:
- WO-A-2005/121594
- FR-A- 1 123 737
- GB-A- 356 657

## Description

This invention relates to an apparatus for damping the torsional excitation of a hollow drive shaft.

It is known to design drive shafts such that their critical speeds (the speeds at which they resonate) do not coincide with the speeds of operation of the equipment being driven. This helps avoid torsional excitation of the drive shaft. It is not always possible to so design a drive shaft. Further, torsional excitation of a drive shaft may occur due to operation of other equipment not driven by the drive shaft but in the same vicinity. Torsional excitation of a drive shaft may also occur due to operation of equipment connected to the equipment being driven, e.g. connected by an electrical circuit. This is especially so since the advent of high powered electronic control equipment utilising thyristors.

When a drive shaft is not robust enough to cope with the torsional excitation it experiences, this is dealt with by: increasing the robustness of the drive shaft; reducing the magnitude of the torsional stresses applied to the drive shaft; and damping the torsional excitation of the drive shaft itself. The present invention relates to the last of these three alternatives.

WO-2005/121594-A2 discloses an apparatus for damping the torsional excitation of a drive shaft according to the preamble of claim 1.

According to the present invention there is provided an apparatus for damping the torsional excitation of a hollow drive shaft, the apparatus comprising: an elongate member that may extend along the interior of the drive shaft, one end of the member being securable to one end of the drive shaft, the other end of the member being disposable at the other end of the drive shaft; and a hydraulic damping device securable to the other end of the drive shaft for damping vibration of the other end of the member, the hydraulic damping device including: a piston and cylinder arrangement having first and second hydraulic chambers; a reservoir of hydraulic fluid; and hydraulic circuitry by means of which the hydraulic chambers communicate with the reservoir of hydraulic fluid, wherein the hydraulic damping device is arranged so that any leakage of hydraulic fluid from the first and second hydraulic chambers via a piston/cylinder interface passes to the reservoir of hydraulic fluid, wherein the reservoir of hydraulic fluid surrounds the elongate member and may extend along the interior of the hollow drive shaft from the one end of the member to the other.

In an apparatus according to the preceding paragraph, it is preferable that the piston and cylinder arrangement includes a piston located in a wall of the reservoir.

In an apparatus according to the preceding paragraph, it is preferable that an actuation lever extends radially outwardly from the elongate member at the other end of the member, the lever acting upon the piston.

In an apparatus according to the preceding paragraph, it is preferable that a pair of actuation levers extend radially outwardly from the elongate member at the other end of the member, the levers being located on opposite sides of the member, and the hydraulic damping device comprises: first and second piston and cylinder arrangements, one lever acting upon the first piston and cylinder arrangement, the other lever acting upon the second piston and cylinder arrangement, the first piston and cylinder arrangement extending in a line of vibration of the one lever, the second piston and cylinder arrangement extending in a line of vibration of the other lever; and hydraulic circuitry by means of which the first and second hydraulic chambers of the piston and cylinder arrangements communicate with the reservoir of hydraulic fluid.

In an apparatus according to the preceding paragraph, it is preferable that each piston and cylinder arrangement comprises a single cylinder containing a single piston, each piston being positioned along its cylinder so as to form at either end of the cylinder the first and second hydraulic chambers of the piston and cylinder arrangement.

In an apparatus according to the preceding paragraph, it is preferable that the hydraulic circuitry comprises first and second sections, each section comprising first and second branches connected in parallel, one branch comprising a flow restrictor, the other branch comprising a check valve that permits flow only in a direction away from the reservoir, the first section being connected between the reservoir and both the first hydraulic chamber of the first piston and cylinder arrangement and the diagonally opposite second hydraulic chamber of the second piston and cylinder arrangement, the second section being connected between the reservoir and both the second hydraulic chamber of the first piston and cylinder arrangement and the diagonally opposite first hydraulic chamber of the second piston and cylinder arrangement.

In an apparatus according to the preceding paragraph but two, it is preferable that the first piston and cylinder arrangement comprises a first pair of piston and cylinder assemblies disposed opposite one another in the line of vibration of the one actuation lever, the pistons of the first pair of assemblies bearing against opposite sides of the one lever, and the second piston and cylinder arrangement comprises a second pair of piston and cylinder assemblies disposed opposite one another in the line of vibration of the other actuation lever, the pistons of the second pair of assemblies bearing against opposite sides of the other lever.

In an apparatus according to the preceding paragraph, it is preferable that each piston and cylinder assembly contains a spring located in its hydraulic chamber that biases its piston against an actuation lever, and the piston of each assembly contains therein a flow restrictor and a check valve connected in parallel that communicate between the hydraulic chamber of the assembly and the reservoir of hydraulic fluid, the check valve permitting fluid flow only in a direction away from the reservoir.

In an apparatus according to either of the preceding two paragraphs, it is preferable that the piston of each piston and cylinder assembly includes an actuator arm that extends from the piston generally radially outwardly, the radially outer end of each actuator arm bearing against a side of an actuation lever.

In an apparatus according to any one of the preceding six paragraphs, it is preferable that the reservoir of hydraulic fluid extends around the pair of actuation levers.

In an apparatus according to the preceding paragraph, it is preferable that a spring loaded piston located adjacent the hydraulic damping device and on the axis of rotation of the drive shaft pressurises the reservoir of hydraulic fluid.

The invention will now be described, by way of example, with reference to the accompanying drawings, in which:
Fig 1 is a longitudinal cross section through a hollow drive shaft and an apparatus in accordance with the present invention;
Fig 2 is a cross section on the line II-II in Fig 1;
Fig 3 illustrates an alternative to that shown in Fig 2;
Fig 4 illustrates in greater detail a piston and cylinder assembly used in Fig 3; and
Fig 5 illustrates a modification to that shown in Fig 3.

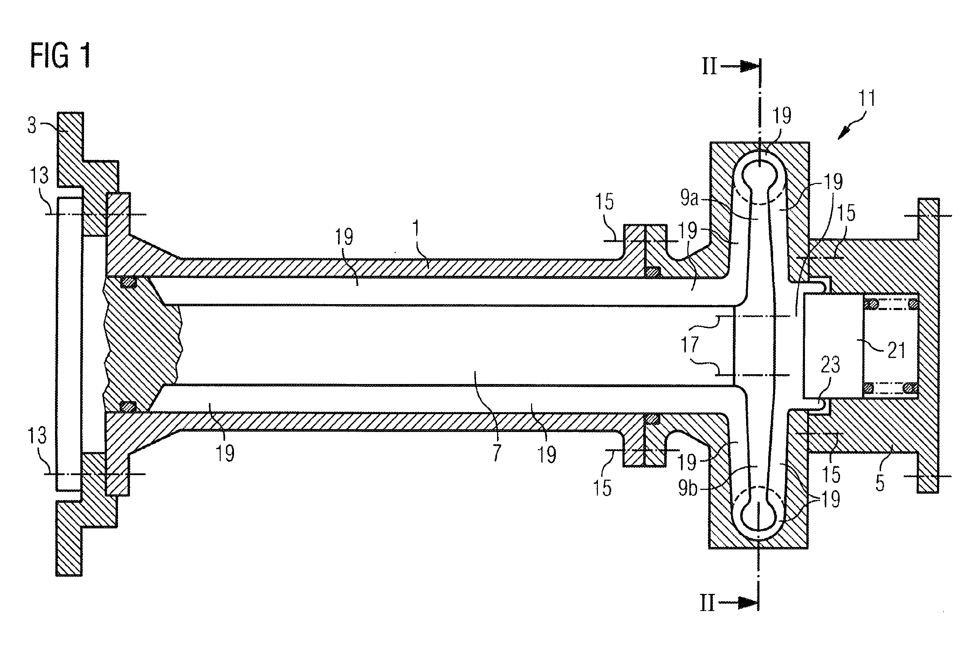

Referring to Fig 1, a hollow drive shaft 1 is driven by a driver 3, and drives a driven unit 5. The apparatus in accordance with the present invention comprises a torsionally stiff solid cylindrical transfer member 7 concentric with shaft 1, a pair of actuation levers 9a, 9b, and a hydraulic damping device 11. Damping device 11 is connected between shaft 1 and driven unit 5. Driver 3 is connected to shaft 1 by fixings 13, damping device 11 is connected between shaft 1 and driven unit 5 by fixings 15, and actuation levers 9a, 9b are connected to transfer member 7 by fixings 17. Fixings 13 also secure one end of member 7 to the end of shaft 1 connected to driver 3. Member 7 extends along the interior of hollow shaft 1. Levers 9a, 9b are located at the end of member 7 remote from the securing of member 7 to shaft 1, and extend radially outwardly from member 7 spaced 180 degrees apart. Levers 9a, 9b extend so as to communicate with hydraulic damping device 11. The precise nature of this communication will be described below. A pressurised hydraulic fluid reservoir 19 is maintained around member 7 and levers 9a, 9b. The fluid is pressurised by a spring loaded piston 21 located in driven unit 5. Piston 21 communicates with reservoir 19 via a rolling diaphragm 23.

An oscillating twist in shaft 1 due to torsional excitation of shaft 1 results in corresponding relative rotary movement between levers 9a, 9b and damping device 11. For example, take the instance where the driven unit end of shaft 1 is twisted clockwise, and consequently the driver end of shaft 1 is twisted anti-clockwise. The clockwise twisting of the driven unit end causes a corresponding clockwise twist of damping device 11 connected to this end, and the anti-clockwise twisting of the driver end causes a corresponding anti-clockwise twist of transfer member 7 secured to this end and hence a corresponding anti-clockwise twist of levers 9a, 9b. The relative angular position of damping device 11 and levers 9a, 9b corresponds to the twist at that instant of shaft 1.

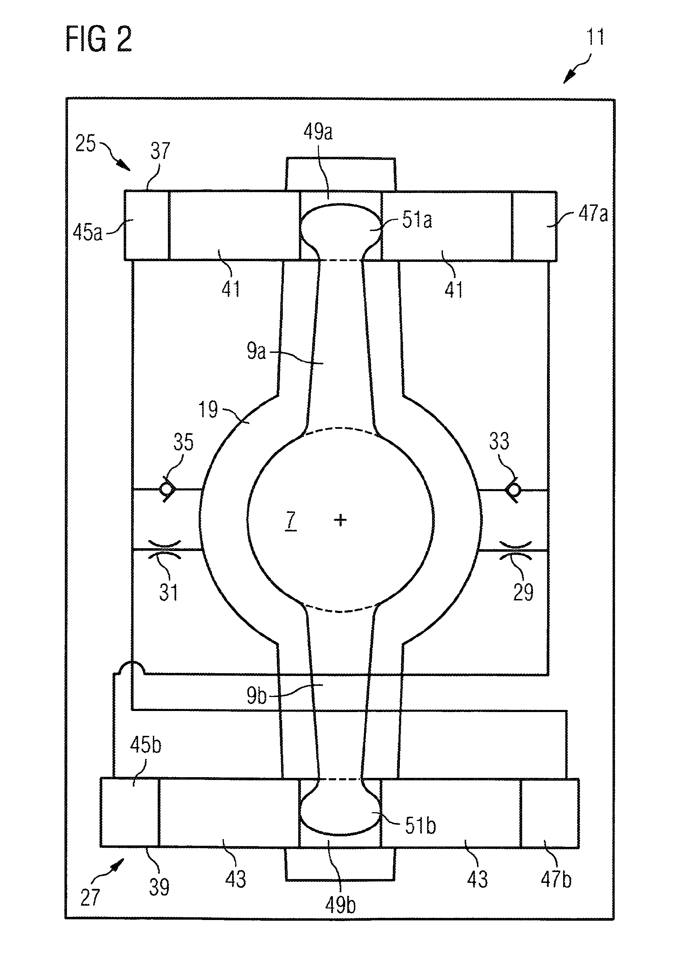

Referring also to Fig 2, hydraulic damping device 11 comprises first and second piston and cylinder arrangements 25, 27, pressurised hydraulic fluid reservoir 19, first and second restrictor orifices 29, 31, and first and second check valves 33, 35.

Each of the first and second piston and cylinder arrangements 25, 27 comprises a single cylinder 37, 39 containing a single piston 41, 43. Each piston 41, 43 is positioned generally centrally along its cylinder 37, 39 so as to form at either end of the cylinder 37, 39 first and second hydraulic chambers 45a, 45b, 47a, 47b. A slot 49a, 49b is cut centrally along each piston 41, 43 to receive an end 51a, 51b of a corresponding actuation lever 9a, 9b. Each piston and cylinder arrangement 25, 27 extends in the line of vibration of the end 51a, 51b of its corresponding lever 9a, 9b.

The fluid flow path between diagonally opposite hydraulic chambers 45a, 47b and pressurised reservoir 19 comprises first and second branches connected in parallel, one branch comprising restrictor orifice 31, the other branch comprising check valve 35. Similarly, the fluid flow path between diagonally opposite chambers 47a, 45b and reservoir 19 comprises first and second branches connected in parallel, one branch comprising restrictor orifice 29, the other branch comprising check valve 33. Restrictor orifices 29, 31 are designed so that the flow therethrough is laminar. Check valves 33, 35 permit fluid flow only in a direction away from reservoir 19. Check valves 33, 35 are designed so as to be low pressure drop and fast response.

The operation of hydraulic damping device 11 is as follows.

With particular reference to Fig. 2, if, due to torsional excitation of drive shaft 1, actuation levers 9a, 9b rotate in a clockwise direction, then this forces to the right piston 41 of piston and cylinder arrangement 25, and to the left piston 43 of piston and cylinder arrangement 27. This reduces the size of hydraulic chambers 47a, 45b, displacing fluid out of chambers 47a, 45b. The displaced fluid passes via restrictor orifice 29 into pressurised reservoir 19 (note check valve 33 permits flow only in a direction away from reservoir 19). Due to the flow into reservoir 19 and that reservoir 19 is pressurised, fluid also leaves reservoir 19. It crosses check valve 35 to reach hydraulic chambers 45a, 47b. The pressure difference across both first pair of chambers 45a, 47a and second pair of chambers 45b, 47b equals the pressure difference across restrictor orifice 29, and is proportional to the torque opposing the angular twist of shaft 1. As the flow across restrictor orifice 29 is dependent upon the angular twist velocity of shaft 1, a true damping torque is produced which is proportional to the angular twist velocity. Provided laminar flow is maintained across restrictor orifice 29, the damping is purely linear and viscous in nature.

If torsional excitation of shaft 1 causes levers 9a, 9b to rotate in an anti-clockwise direction, then operation of the hydraulic damping circuit is as before, but in reverse. Thus, fluid leaves chambers 45a, 47b, crosses restrictor orifice 31, enters and leaves reservoir 19, crosses check valve 33, and enters chambers 47a, 45b. In this case, the pressure difference across both first pair of chambers 45a, 47a and second pair of chambers 45b, 47b equals the pressure difference across restrictor orifice 31.

If the dynamics of the overall system are well defined, then restrictor orifices 29, 31 may be of fixed restriction, i.e. variation of their restriction not possible. This saves cost. However, in a less well defined system, variable laminar orifices may be used to provide adjustable damping. The level of damping would then be adjusted to suit actual running conditions.

Hydraulic systems over the course of their operating life may suffer loss of incompressibility due to the formation of gas/air bubbles. This is of little consequence in many hydraulic systems, but in the case of the above described system may well result in inoperability, since an instantaneous damping torque is required in response to very small angular displacements. Gas/air bubbles form due to cavitation in the hydraulic fluid, i.e. negative pressure in the hydraulic fluid which results in the gas/air normally present in a hydraulic fluid coming out of solution to form gas/air bubbles. Cavitation typically occurs when a hydraulic fluid is drawn into a chamber by expansion of the chamber. In the above described system, cavitation is prevented by the use of: (i) pressurised reservoir 19; and (ii) check valves 33, 35 in parallel with restrictor orifices 29, 31 (the check valves allow hydraulic fluid to bypass the restrictor orifices when flowing to a chamber 45a, 47a, 45b, 47b, thereby enabling a fast response to an expanding chamber 45a, 47a, 45b, 47b).

It is to be noted that pressurised reservoir 19 compensates for volume fluctuations within the hydraulic circuit. Such fluctuations might occur due to: wear (e.g. at the contact surfaces where ends 51a, 51b of actuation levers 9a, 9b abut pistons 41, 43), temperature change, and hydraulic fluid leakage.

It is to be noted that any hydraulic fluid leakage from chambers 45a, 47a, 45b, 47b via the interfaces between pistons 41, 43 and cylinders 37, 39 will pass to reservoir 19, therefore remaining in the closed hydraulic circuit and not harming operation.

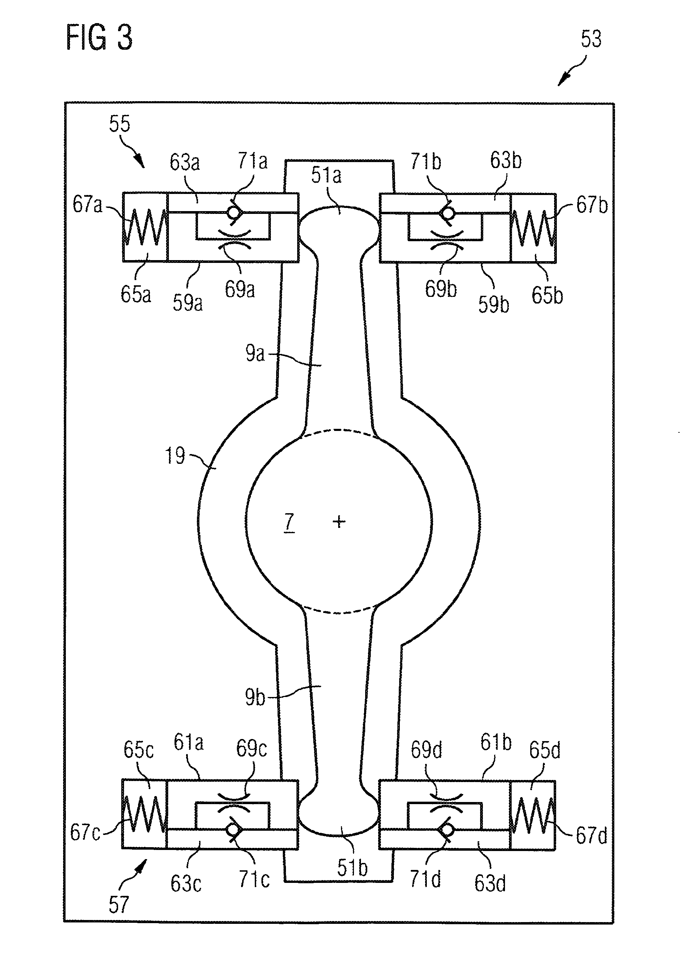

The alternative hydraulic damping device 53 shown in Fig 3 comprises first and second piston and cylinder arrangements 55, 57, and pressurised hydraulic fluid reservoir 19 (as reservoir 19 in Fig 2). The first arrangement 55 comprises a pair of piston and cylinder assemblies 59a, 59b disposed opposite one another in the line of vibration of end 51a of actuator lever 9a, the pistons of assemblies 59a, 59b bearing against opposite sides of end 51a. Similarly, the second piston and cylinder arrangement 57 comprises a pair of piston and cylinder assemblies 61a, 61b disposed opposite one another in the line of vibration of end 51b of actuator lever 9b, the pistons of assemblies 61a, 61b bearing against opposite sides of end 51b. Each piston and cylinder assembly 59a, 59b, 61a, 61b comprises a piston 63a, 63b, 63c, 63d, a hydraulic chamber 65a, 65b, 65c, 65d, a spring 67a, 67b, 67c, 67d, a restrictor orifice 69a, 69b, 69c, 69d, and a check valve 71a, 71b, 71c, 71d. Each spring 67a, 67b, 67c, 67d is located in a respective chamber 65a, 65b, 65c, 65d, and biases a respective piston 63a, 63b, 63c, 63d against a side of an end 51a, 51b of an actuator lever 9a, 9b (it is to be noted here that this arrangement will self adjust for any wear of ends 51a, 51b). Each piston 63a, 63b, 63c, 63d contains a restrictor orifice 69a, 69b, 69c, 69d and a check valve 71a, 71b, 71c, 71d connected in parallel. The restrictor orifices 69a, 69b, 69c, 69d and check valves 71a, 71b, 71c, 71d communicate between chambers 65a, 65b, 65c, 65d and pressurised reservoir 19. Each check valve 71a, 71b, 71c, 71d permits fluid flow only in a direction away from reservoir 19.

The operation of hydraulic damping device 53 is as follows.

If, due to torsional excitation of drive shaft 1, actuation levers 9a, 9b rotate in a clockwise direction, then this forces to the right piston 63b of piston and cylinder assembly 59b, and to the left piston 63c of piston and cylinder assembly 59c. This reduces the size of hydraulic chambers 65b, 65c, displacing fluid out of chambers 65b, 65c. The displaced fluid passes via restrictor orifices 69b, 69c into pressurised reservoir 19 (note check valves 71b, 71c permit flow only in a direction away from reservoir 19). Due to the flow into reservoir 19 and that reservoir 19 is pressurised, fluid also leaves reservoir 19. It crosses check valves 71a, 71d to reach hydraulic chambers 65a, 65d. The pressure difference across both pair of chambers 65a, 65b and pair of chambers 65c, 65d equals the pressure difference across restrictor orifices 69b, 69c and is proportional to the torque opposing the angular twist of shaft 1. As the flow across restrictor orifices 69b, 69c is dependent upon the angular twist velocity of shaft 1, a true damping torque is produced which is proportional to the angular twist velocity. Provided laminar flow is maintained across restrictor orifices 69b, 69c, the damping is purely linear and viscous in nature.

If torsional excitation of shaft 1 causes levers 9a, 9b to rotate in an anti-clockwise direction, then operation of the hydraulic damping circuit is as before, but in reverse. Thus, fluid leaves chambers 65a, 65d, crosses restrictor orifices 69a, 69d, enters and leaves reservoir 19, crosses check valves 71b, 71c, and enters chambers 65b, 65c. In this case, the pressure difference across both pair of chambers 65a, 65b and pair of chambers 65c, 65d equals the pressure difference across restrictor orifices 69a, 69d.

Similarly to the hydraulic damping device of Fig 2, any hydraulic fluid leakage from chambers 65a, 65b, 65c, 65d via the interfaces between pistons 63a, 63b, 63c, 63d and their cylinders will pass to reservoir 19, therefore remaining in the closed hydraulic circuit and not harming operation.

In the hydraulic damping device of Fig 3, the required restrictor orifices and check valves are located internally of the first and second piston and cylinder arrangements 55, 57. This is to simplify manufacture, and is to be contrasted to the hydraulic damping device of Fig 2 wherein the restrictor orifices and check valves are located externally of the first and second piston and cylinder arrangements 25, 27.

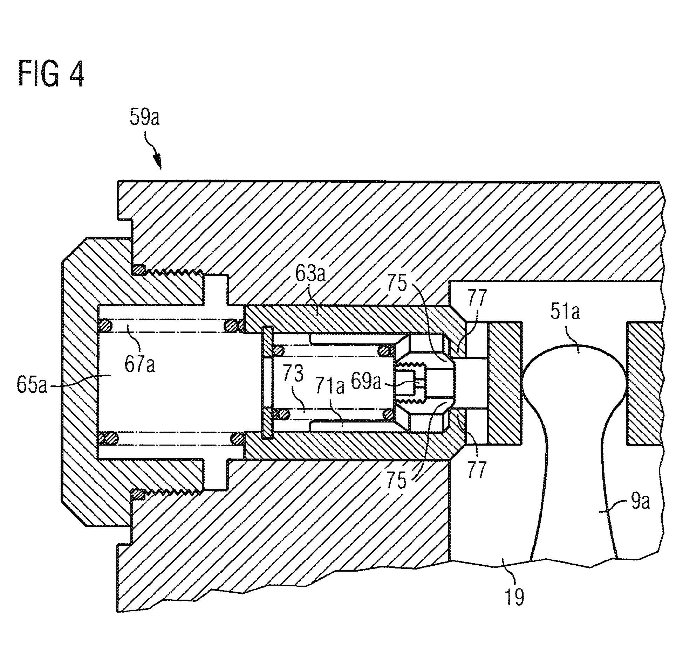

Fig 4 illustrates in greater detail the structure of piston and cylinder assembly 59a. The structure of piston and cylinder assemblies 59b, 61a, 61b is the same. If end 51a of actuation lever 9a moves to the right, this allows piston 63a to move to the right under the action of spring 67a. This creates a pressure drop between reservoir 19 and chamber 65a that moves to the left, against the action of spring 73 of check valve 71a, cone end 75 of check valve 71a. This unseats cone end 75 from mating annulus 77 of piston 63a, opening valve 71a, and allowing fluid to pass to chamber 65a. If end 51a of actuation lever 9a moves to the left, this compresses springs 67a and 73, reducing the size of chamber 65a, and causing fluid to pass from chamber 65a via restrictor orifice 69a to reservoir 19. It is to be noted that whether end 51a moves to the right or left, the head of piston 63a always remains biased against end 51a due to the action of spring 67a.

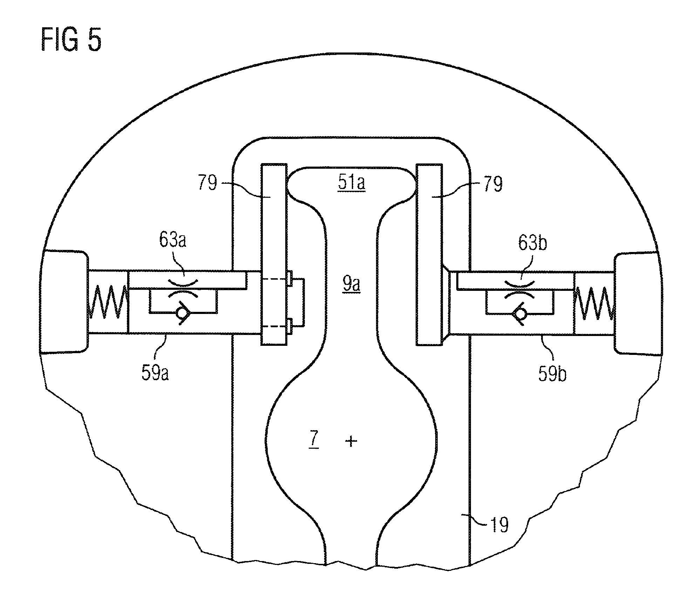

The hydraulic damping device of Fig 5 is the same as that of Fig 3 with the exception that actuator arms 79 have been added to pistons 63a, 63b, 63c, 63d, and pressurised reservoir 19 has been reshaped to be generally rectangular. This enables piston and cylinder assemblies 59a, 59b, 61a, 61b to be moved inward, providing a more compact, overall circular hydraulic damping device.

## Claims

1. An apparatus for damping the torsional excitation of a hollow drive shaft, the apparatus comprising: an elongate member (7) that may extend along the drive shaft (1), one end of the member (7) being securable to one end of the drive shaft (1), the other end of the member (7) being disposable at the other end of the drive shaft (1); and a hydraulic damping device (11 or 53) securable to the other end of the drive shaft (1) for damping vibration of the other end of the member (7), the hydraulic damping device (11 or 53) including: a piston and cylinder arrangement (25 or 55) having first and second hydraulic chambers (45a, 47a or 65a, 65b); a reservoir (19) of hydraulic fluid; and hydraulic circuitry (29, 31, 33, 35 or 69a, 69b, 71a, 71b) by means of which the hydraulic chambers (45a, 47a or 65a, 65b) communicate with the reservoir (19) of hydraulic fluid, **characterised in that** the elongate member (7) may extend along the interior of the drive shaft (1) and **in that**
the hydraulic damping device (11 or 53) is arranged so that any leakage of hydraulic fluid from the first and second hydraulic chambers (45a, 47a or 65a, 65b) via a piston/cylinder interface passes to the reservoir (19) of hydraulic fluid, wherein the reservoir (19) of hydraulic fluid surrounds the elongate member (7) and may extends along the interior of the hollow drive shaft (1) from the one end of the member (7) to the other.

2. An apparatus according to claim 1 wherein the piston and cylinder arrangement (25 or 55) includes a piston (41 or 63a, 63b) located in a wall of the reservoir (19).

3. An apparatus according to claim 2 wherein an actuation lever (9a) extends radially outwardly from the elongate member (7) at the other end of the member (7), the lever (9a) acting upon the piston (41 or 63a, 63b).

4. An apparatus according to claim 3 wherein a pair of actuation levers (9a, 9b) extend radially outwardly from the elongate member (7) at the other end of the member (7), the levers (9a, 9b) being located on opposite sides of the member (7), and the hydraulic damping device (11 or 53) comprises: first and second piston and cylinder arrangements (25, 27 or 55, 57), one lever (9a) acting upon the first piston and cylinder arrangement (25 or 55), the other lever (9b) acting upon the second piston and cylinder arrangement (27 or 57), the first piston and cylinder arrangement (25 or 55) extending in a line of vibration of the one lever (9a), the second piston and cylinder arrangement (27 or 57) extending in a line of vibration of the other lever (9b); and hydraulic circuitry (29, 31, 33, 35 or 69a, 69b, 69c, 69d, 71a, 71b, 71c, 71d) by means of which the first and second hydraulic chambers (45a, 47a, 45b, 47b or 65a, 65b, 65c, 65d) of the piston and cylinder arrangements (25, 27 or 55, 57) communicate with the reservoir (19) of hydraulic fluid.

5. An apparatus according to claim 4 wherein each piston and cylinder arrangement (25, 27) comprises a single cylinder (37, 39) containing a single piston (41, 43), each piston (41, 43) being positioned along its cylinder (37, 39) so as to form at either end of the cylinder (37, 39) the first and second hydraulic chambers (45a, 47a, 45b, 47b) of the piston and cylinder arrangement (25, 27).

6. An apparatus according to claim 5 wherein the hydraulic circuitry (29, 31, 33, 35) comprises first and second sections, each section comprising first and second branches connected in parallel, one branch comprising a flow restrictor (29, 31), the other branch comprising a check valve (33, 35) that permits flow only in a direction away from the reservoir (19), the first section being connected between the reservoir (19) and both the first hydraulic chamber (45a) of the first piston and cylinder arrangement (25) and the diagonally opposite second hydraulic chamber (47b) of the second piston and cylinder arrangement (27), the second section being connected between the reservoir (19) and both the second hydraulic chamber (47a) of the first piston and cylinder arrangement (25) and the diagonally opposite first hydraulic chamber (45b) of the second piston and cylinder arrangement (27).

7. An apparatus according to claim 4 wherein the first piston and cylinder arrangement (55) comprises a first pair of piston and cylinder assemblies (59a, 59b) disposed opposite one another in the line of vibration of the one actuation lever (9a), the pistons (63a, 63b) of the first pair of assemblies (59a, 59b) bearing against opposite sides of the one lever (9a), and the second piston and cylinder arrangement (57) comprises a second pair of piston and cylinder assemblies (61a, 61b) disposed opposite one another in the line of vibration of the other actuation lever (9b), the pistons (63c, 63d) of the second pair of assemblies (61a, 61b) bearing against opposite sides of the other lever (9b).

8. An apparatus according to claim 7 wherein each piston and cylinder assembly (59a, 59b, 61a, 61b) contains a spring (67a, 67b, 67c, 67d) located in its hydraulic chamber (65a, 65b, 65c, 65d) that biases its piston (63a, 63b, 63c, 63d) against an actuation lever (9a, 9b), and the piston (63a, 63b, 63c, 63d) of each assembly (59a, 59b, 61a, 61b) contains therein a flow restrictor (69a, 69b, 69c, 69d) and a check valve (71a, 71b, 71c, 71d) connected in parallel that communicate between the hydraulic chamber (65a, 65b, 65c, 65d) of the assembly (59a, 59b, 61a, 61b) and the reservoir (19) of hydraulic fluid, the check valve (71a, 71b, 71c, 71d) permitting fluid flow only in a direction away from the reservoir (19).

9. An apparatus according to claim 7 or claim 8 wherein the piston (63a, 63b, 63c, 63d) of each piston and cylinder assembly (59a, 59b, 61a, 61b) includes an actuator arm (79) that extends from the piston (63a, 63b, 63c, 63d) generally radially outwardly, the radially outer end of each actuator arm (79) bearing against a side of an actuation lever (9a, 9b).

10. An apparatus according to any one of claims 4 to 9 wherein the reservoir (19) of hydraulic fluid extends around the pair of actuation levers (9a, 9b).

11. An apparatus according to claim 10 wherein a spring loaded piston (21) located adjacent the hydraulic damping device (11 or 53) and on the axis of rotation of the drive shaft (1) pressurises the reservoir (19) of hydraulic fluid.

## Patentansprüche

1. Vorrichtung zur Dämpfung der Torsionsanregung einer Hohlantriebswelle, wobei die Vorrichtung umfasst: ein langgestrecktes Element (7), welches sich entlang der Antriebswelle (1) erstrecken kann, wobei ein Ende des Elements (7) an einem Ende der Antriebswelle (1) befestigbar ist, während das andere Ende des Elements (7) an dem anderen Ende der Antriebswelle (1) angeordnet werden kann; und eine hydraulische Dämpfungseinrichtung (11 oder 53), die an dem anderen Ende der Antriebswelle (1) befestigbar ist, zum Dämpfen der Schwingung des anderen Endes des Elements (7), wobei die hydraulische Dämpfungseinrichtung (11 oder 53) aufweist: eine Kolben- und Zylinderanordnung (25 oder 55) mit einer ersten und einer zweiten Hydraulikkammer (45a, 47a oder 65a, 65b); einen Vorratsbehälter (19) für Hydraulikfluid; und Hydraulikkreise (29, 31, 33, 35 oder 69a, 69b, 71a, 71b), mittels welcher die Hydraulikkammern (45a, 47a oder 65a, 65b) mit dem Vorratsbehälter (19) für Hydraulikfluid kommunizieren, **dadurch gekennzeichnet, dass**
das langgestreckte Element (7) sich entlang des Inneren der Antriebswelle (1) erstrecken kann; und dadurch, dass die hydraulische Dämpfungseinrichtung (11 oder 53) so angeordnet ist, dass eine eventuelle Leckmenge von Hydraulikfluid aus der ersten und zweiten Hydraulikkammer (45a, 47a oder 65a, 65b) über eine Grenzfläche Kolben/Zylinder zu dem Vorratsbehälter (19) für Hydraulikfluid strömt, wobei der Vorratsbehälter (19) für Hydraulikfluid das langgestreckte Element (7) umgibt und sich entlang des Inneren der Hohlantriebswelle (1) von dem einen Ende des Elements (7) bis zum anderen erstrecken kann.

2. Vorrichtung nach Anspruch 1, wobei die Kolben- und Zylinderanordnung (25 oder 55) einen Kolben (41 oder 63a, 63b) enthält, der in einer Wand des Vorratsbehälters (19) angeordnet ist.

3. Vorrichtung nach Anspruch 2, wobei sich ein Betätigungshebel (9a) von dem langgestreckten Element (7) aus am anderen Ende des Elements (7) radial nach außen erstreckt, wobei der Hebel (9a) auf den Kolben (41 oder 63a, 63b) einwirkt.

4. Vorrichtung nach Anspruch 3, wobei sich ein Paar von Betätigungshebeln (9a, 9b) von dem langgestreckten Element (7) aus am anderen Ende des Elements (7) radial nach außen erstreckt, wobei die Hebel (9a, 9b) auf gegenüberliegenden Seiten des Elements (7) angeordnet sind, und wobei die hydraulische Dämpfungseinrichtung (11 oder 53) umfasst: eine erste und eine zweite Kolben- und Zylinderanordnung (25, 27 oder 55, 57), wobei ein Hebel (9a) auf die erste Kolben- und Zylinderanordnung (25 oder 55) einwirkt, der andere Hebel (9b) auf die zweite Kolben- und Zylinderanordnung (27 oder 57) einwirkt, die erste Kolben- und Zylinderanordnung (25 oder 55) sich in einer Schwingungslinie des einen Hebels (9a) erstreckt und die zweite Kolben- und Zylinderanordnung (27 oder 57) sich in einer Schwingungslinie des anderen Hebels (9b) erstreckt; und Hydraulikkreise (29, 31, 33, 35 oder 69a, 69b, 69c, 69d, 71a, 71b, 71c, 71d), mittels welcher die ersten und zweiten Hydraulikkammern (45a, 47a, 45b, 47b oder 65a, 65b, 65c, 65d) der Kolben- und Zylinderanordnungen (25, 27 oder 55, 57) mit dem Vorratsbehälter (19) für Hydraulikfluid kommunizieren.

5. Vorrichtung nach Anspruch 4, wobei jede Kolben- und Zylinderanordnung (25, 27) einen einzigen Zylinder (37, 39) umfasst, der einen einzigen Kolben (41, 43) enthält, wobei jeder Kolben (41, 43) entlang seines Zylinders (37, 39) so positioniert ist, dass er an beiden Enden des Zylinders (37, 39) die ersten und zweiten Hydraulikkammern (45a, 47a, 45b, 47b) der Kolben- und Zylinderanordnung (25, 27) bildet.

6. Vorrichtung nach Anspruch 5, wobei die Hydraulikkreise (29, 31, 33, 35) einen ersten und einen zweiten Abschnitt umfassen, wobei jeder Abschnitt einen ersten und einen zweiten Zweig umfasst, die parallelgeschaltet sind, wobei ein Zweig einen Durchflussbegrenzer (29, 31) umfasst und der andere Zweig ein Rückschlagventil (33, 35) umfasst, welches einen Durchfluss nur in einer Richtung weg von dem Vorratsbehälter (19) ermöglicht, wobei der erste Abschnitt zwischen den Vorratsbehälter (19) und sowohl die erste Hydraulikkammer (45a) der ersten Kolben- und Zylinderanordnung (25) als auch die diagonal gegenüberliegende zweite Hydraulikkammer (47b) der zweiten Kolben- und Zylinderanordnung (27) geschaltet ist, und wobei der zweite Abschnitt zwischen den Vorratsbehälter (19) und sowohl die zweite Hydraulikkammer (47a) der ersten Kolben- und Zylinderanordnung (25) als auch die diagonal gegenüberliegende erste Hydraulikkammer (45b) der zweiten Kolben- und Zylinderanordnung (27) geschaltet ist.

7. Vorrichtung nach Anspruch 4, wobei die erste Kolben- und Zylinderanordnung (55) ein erstes Paar von Kolben- und Zylinderbaugruppen (59a, 59b) umfasst, die einander gegenüberliegend in der Schwingungslinie des einen Betätigungshebels (9a) angeordnet sind, wobei die Kolben (63a, 63b) des ersten Paares von Baugruppen (59a, 59b) an gegenüberliegenden Seiten des einen Hebels (9a) anliegen, und die zweite Kolben- und Zylinderanordnung (57) ein zweites Paar von Kolben- und Zylinderbaugruppen (61a, 61b) umfasst, die einander gegenüberliegend in der Schwingungslinie des anderen Betätigungshebels (9b) angeordnet sind, wobei die Kolben (63c, 63d) des zweiten Paares von Baugruppen (61a, 61b) an gegenüberliegenden Seiten des anderen Hebels (9b) anliegen.

8. Vorrichtung nach Anspruch 7, wobei jede Kolben- und Zylinderbaugruppe (59a, 59b, 61a, 61b) eine Feder (67a, 67b, 67c, 67d) enthält, die in ihrer Hydraulikkammer (65a, 65b, 65c, 65d) angeordnet ist und die ihren Kolben (63a, 63b, 63c, 63d) gegen einen Betätigungshebel (9a, 9b) vorspannt, und der Kolben (63a, 63b, 63c, 63d) jeder Baugruppe (59a, 59b, 61a, 61b) einen Durchflussbegrenzer (69a, 69b, 69c, 69d) und ein Rückschlagventil (71a, 71b, 71c, 71d) darin enthält, die parallelgeschaltet sind und die zwischen die Hydraulikkammer (65a, 65b, 65c, 65d) der Baugruppe (59a, 59b, 61a, 61b) und den Vorratsbehälter (19) für Hydraulikfluid kommunizierend geschaltet sind, wobei das Rückschlagventil (71a, 71b, 71c, 71d) den Durchfluss nur in einer Richtung weg von dem Vorratsbehälter (19) ermöglicht.

9. Vorrichtung nach Anspruch 7 oder Anspruch 8, wobei der Kolben (63a, 63b, 63c, 63d) jeder Kolben- und Zylinderbaugruppe (59a, 59b, 61a, 61b) einen Betätigungsarm (79) aufweist, welcher sich von dem Kolben (63a, 63b, 63c, 63d) im Allgemeinen radial nach außen erstreckt, wobei das radial äußere Ende jedes Betätigungsarm (79) an einer Seite eines Betätigungshebels (9a, 9b) anliegt.

10. Vorrichtung nach einem der Ansprüche 4 bis 9, wobei sich der Vorratsbehälter (19) für Hydraulikfluid um das Paar von Betätigungshebeln (9a, 9b) herum erstreckt.

11. Vorrichtung nach Anspruch 10, wobei ein federbelasteter Kolben (21), welcher der hydraulischen Dämpfungseinrichtung (11 oder 53) benachbart und auf der Drehachse der Antriebswelle (1) angeordnet ist, den Vorratsbehälter (19) für Hydraulikfluid mit Druck beaufschlagt.

## Revendications

1. Appareil d'amortissement de l'excitation en torsion d'un arbre d'entraînement creux, l'appareil comprenant : un élément allongé (7) qui peut s'étendre le long de l'arbre d'entraînement (1), une extrémité de l'élément (7) pouvant être fixée sur une extrémité de l'arbre d'entraînement (1), l'autre extrémité de l'élément (7) pouvant être disposée à l'autre extrémité de l'arbre d'entraînement (1) ; et un dispositif d'amortissement hydraulique (11 ou 53) pouvant être fixé sur l'autre extrémité de l'arbre d'entraînement (1) pour amortir une vibration de l'autre extrémité de l'élément (7), le dispositif d'amortissement hydraulique (11 ou 53) incluant : un agencement de piston et cylindre (25 ou 55) ayant une première et une deuxième chambres hydrauliques (45a, 47a ou 65a, 65b) ; un réservoir (19) de fluide hydraulique ; et un circuit hydraulique (29, 31, 33, 35 ou 69a, 69b, 71a, 71b) au moyen duquel les chambres hydrauliques (45a, 47a ou 65a, 65b) communiquent avec le réservoir (19) de fluide hydraulique,
**caractérisé en ce que**
l'élément allongé (7) peut s'étendre le long de l'intérieur de l'arbre d'entraînement (1) et **en ce que**
le dispositif d'amortissement hydraulique (11 ou 53) est agencé de telle manière qu'une quelconque fuite de fluide hydraulique des première et deuxième chambres hydrauliques (45a, 47a ou 65a, 65b) par l'intermédiaire d'une interface piston/cylindre passe jusqu'au réservoir (19) de fluide hydraulique, dans lequel le réservoir (19) de fluide hydraulique entoure l'élément allongé (7) et peut s'étendre le long de l'intérieur de l'arbre d'entraînement (1) creux d'une extrémité de l'élément (7) jusqu'à l'autre.

2. Appareil selon la revendication 1 dans lequel l'agencement de piston et cylindre (25 ou 55) inclut un piston (41 ou 63a, 63b) situé dans une paroi du réservoir (19).

3. Appareil selon la revendication 2 dans lequel un levier d'actionnement (9a) s'étend radialement vers l'extérieur à partir de l'élément allongé (7) à l'autre extrémité de l'élément (7), le levier (9a) agissant sur le piston (41 ou 63a, 63b).

4. Appareil selon la revendication 3 dans lequel une paire de leviers d'actionnement (9a, 9b) s'étendent radialement vers l'extérieur à partir de l'élément allongé (7) à l'autre extrémité de l'élément (7), les leviers (9a, 9b) étant situés sur des côtés opposés de l'élément (7), et le dispositif d'amortissement hydraulique (11 ou 53) comprend : un premier et un deuxième agencements de piston et cylindre (25, 27 ou 55, 57), un levier (9a) agissant sur le premier agencement de piston et cylindre (25 ou 55), l'autre levier (9b) agissant sur le deuxième agencement de piston et cylindre (27 ou 57), le premier agencement de piston et cylindre (25 ou 55) s'étendant sur une ligne de vibration du levier (9a), le deuxième agencement de piston et cylindre (27 ou 57) s'étendant sur une ligne de vibration de l'autre levier (9b) ; et un circuit hydraulique (29, 31, 33, 35 ou 69a, 69b, 69c, 69d, 71a, 71b, 71c, 71d) au moyen duquel les première et deuxième chambres hydrauliques (45a, 47a, 45b, 47b ou 65a, 65b, 65c, 65d) des agencements de piston et cylindre (25, 27 ou 55, 57) communiquent avec le réservoir (19) de fluide hydraulique.

5. Appareil selon la revendication 4 dans lequel chaque agencement de piston et cylindre (25, 27) comprend un cylindre unique (37, 39) contenant un piston unique (41, 43), chaque piston (41, 43) étant positionné le long de son cylindre (37, 39) de manière à former à l'une ou l'autre extrémité du cylindre (37, 39) les première et deuxième chambres hydrauliques (45a, 47a, 45b, 47b) de l'agencement de piston et cylindre (25, 27).

6. Appareil selon la revendication 5 dans lequel le circuit hydraulique (29, 31, 33, 35) comprend une première et une deuxième sections, chaque section comprenant une première et une deuxième branches connectées en parallèle, une branche comprenant un réducteur de débit (29, 31), l'autre branche comprenant un clapet anti-retour (33, 35) qui ne permet un écoulement que dans un sens s'éloignant du réservoir (19), la première section étant connectée entre le réservoir (19) et à la fois la première chambre hydraulique (45a) du premier agencement de piston et cylindre (25) et la deuxième chambre hydraulique (47b) diagonalement opposée du deuxième agencement de piston et cylindre (27), la deuxième section étant connectée entre le réservoir (19) et à la fois la deuxième chambre hydraulique (47a) du premier agencement de piston et cylindre (25) et la première chambre hydraulique (45b) diagonalement opposée du deuxième agencement de piston et cylindre (27).

7. Appareil selon la revendication 4 dans lequel le premier agencement de piston et cylindre (55) comprend une première paire d'ensembles de piston et cylindre (59a, 59b) disposés opposés l'un à l'autre sur la ligne de vibration du levier d'actionnement (9a), les pistons (63a, 63b) de la première paire d'ensembles (59a, 59b) portant contre des côtés opposés du levier (9a), et le deuxième agencement de piston et cylindre (57) comprend une deuxième paire d'ensembles de piston et cylindre (61a, 61b) disposés opposés l'un à l'autre sur la ligne de vibration de l'autre levier d'actionnement (9b), les pistons (63c, 63d) de la deuxième paire d'ensembles (61a, 61b) portant contre des côtés opposés de l'autre levier (9b).

8. Appareil selon la revendication 7 dans lequel chaque ensemble de piston et cylindre (59a, 59b, 61a, 61b) contient un ressort (67a, 67b, 67c, 67d) situé dans sa chambre hydraulique (65a, 65b, 65c, 65d) qui pousse son piston (63a, 63b, 63c, 63d) contre un levier d'actionnement (9a, 9b), et le piston (63a, 63b, 63c, 63d) de chaque ensemble (59a, 59b, 61a, 61b) contient dans celui-ci un réducteur de débit (69a, 69b, 69c, 69d) et un clapet anti-retour (71a, 71b, 71c, 71d) connectés en parallèle qui communiquent entre la chambre hydraulique (65a, 65b, 65c, 65d) de l'ensemble (59a, 59b, 61a, 61b) et le réservoir (19) de fluide hydraulique, le clapet anti-retour (71a, 71b, 71c, 71d) ne permettant un écoulement de fluide que dans un sens s'éloignant du réservoir (19).

9. Appareil selon la revendication 7 ou la revendication 8 dans lequel le piston (63a, 63b, 63c, 63d) de chaque ensemble de piston et cylindre (59a, 59b, 61a, 61b) inclut un bras d'actionneur (79) qui s'étend à partir du piston (63a, 63b, 63c, 63d) généralement radialement vers l'extérieur, l'extrémité radialement extérieure de chaque bras d'actionneur (79) portant contre un côté d'un levier d'actionnement (9a, 9b).

10. Appareil selon l'une quelconque des revendication 4 à 9 dans lequel le réservoir (19) de fluide hydraulique s'étend autour de la paire de leviers d'actionnement (9a, 9b).

11. Appareil selon la revendication 10 dans lequel un piston chargé par un ressort (21) situé de manière adjacente au dispositif d'amortissement hydraulique (11 ou 53) et sur l'axe de rotation de l'arbre d'entraînement (1) met sous pression le réservoir (19) de fluide hydraulique.
